# EUROPÄISCHE PATENTSCHRIFT

(11) **EP 0 471 208 B1**
(45) Veröffentlichungstag und Bekanntmachung des Hinweises auf die Patenterteilung: **18.01.1995**
(21) Anmeldenummer: 91112180.4
(22) Anmeldetag: 20.07.1991
(51) Int. Cl.: A01G 25/14

(54) **Brausekopfvorrichtung**
Spray head
Tête de jet d'eau

(30) Priorität: 13.08.1990 DE 9011751 U
(43) Veröffentlichungstag der Anmeldung: 19.02.1992
(73) Patentinhaber: Baber, Reinhard, D-69437 Neckargerach (DE)
(72) Erfinder: Baber, Reinhard, D-69437 Neckargerach (DE)
(74) Vertreter: Müller, Hans, Dipl.-Ing.

(56) Entgegenhaltungen:
- DE-B- 1 053 852
- DE-C- 874 379
- FR-A- 476 220
- GB-A- 238 084

## Beschreibung

### TECHNISCHES GEBIET

Die vorliegende Erfindung betrifft eine Brausekopfvorrichtung zum Aufsetzen auf einen Gießhals einer Gießkanne. Die Gießkanne weist ein Gießbehältnis zur Aufnahme des Gießwassers auf. An der Brausekopfvorrichtung ist ein Gießwasseraustrittsbereich mit Wasseraustrittsöffnungen und einer an den Gießwasseraustrittsbereich anschließenden Außenwandung vorhanden, wobei die Außenwandung bereichsweise mit dem Gießhals zumindest weitgehend wasserdicht verbindbar ist.

In Verbindung mit einer Gießkanne werden derartige Brausekopfvorrichtungen in Gärtnereien, von Hobbygärtnern und im Haushalt bevorzugt eingesetzt um beispielsweise Gartenpflanzen, Balkonpflanzen, Bäume, Sträucher oder sonstige Pflanzen zu gießen, die ihren Wasserbedarf nicht allein aus den wetterbedingten Niederschlägen decken können. Insbesondere im Hobbygärtnerbereich kommen solche Gießkannen während der heißen Jahreszeit häufig zum Einsatz.

Solche Gießkannen mit ihren Brausekopfvorrichtungen sind Massenprodukte, die einerseits zu einem günstigen Preis angeboten werden müssen und andererseits doch so stabil ausgebildet werden, daß sie über Jahre hinweg auch im Freiland eingesetzt werden können. Häufig werden diese Gießkannen mit ihren Brausekopfvorrichtungen aus Kunststoff hergestellt. Neben der Wasserdichtheit muß auch eine gute Handhabung gewährleistet werden.

### STAND DER TECHNIK

In herkömmlichen, auf dem Markt bekannten Gießkannen, ist die Brausekopfvorrichtung klemmend auf den Gießhals aufgesetzt. Der an die Wandung der Brausekopfvorrichtung anschließende nach außen leicht gewölbte, in der Regel kreisrunde Wasseraustrittsbereich mit Öffnungen weißt einen relativ großen Durchmesser auf, damit genügend Wasser beim Gießvorgang austreten kann. Eine derartige Gießkanne ist geeignet, Beete mit flächenhaft angeordnetem Saatgut oder Pflanzen aufgrund des relativ großen Durchmessers des Gießwasseraustrittbereiches mit Wasser zu versorgen.

Beim Gießen von Reihensaat, Pflanzen die in Reihen angepflanzt sind oder einzel stehenden Pflanzen wird jedoch relativ viel Wasser, bedingt durch den breiten Gießstrahl, vergossen, das nicht in den Wurzelbereich der zu gießenden Pflanze gelangt und deshalb nutzlos versickert und/oder verdunstet. Beim Gießen derartiger in Reihen angeordneter Pflanzen mit der bekannten Gießkanne wird somit ein großer Teil des Gießwassers verschwendet. Dies ist insbesondere ein grosser Nachteil für Hobbygärtner, deren Gartenanlage nicht an eine Wasserversorgungsanlage angeschlossen ist und die deshalb als Gießwasser in Behältnissen angesammeltes Regenwasser verwenden. Das Regenwasser wird häufig dadurch gesammelt, daß das bei einem Niederschlag auf die Dachfläche eines Gartenhauses auftreffende Niederschlagsmenge über ein Sammelsystem gesammelt und dem Regenbehältnis zugeführt wird. Diesen Hobbygärtnern steht somit nur eine begrenzte Menge an Gießwasser zur Verfügung. Insbesondere in Zeiten geringen Niederschlags kann die zur Verfügung stehende Wassermenge sehr gering werden, weshalb die Wasserverschwendung beim Gießen von Reihenpflanzgut mit den bekannten Gießkannen als sehr nachteilig empfunden wird.

Aus der DE-C-874 379 ist eine Gießkanne bekannt, bei der der Brausebereich bei ein und derselben Traufe, je nach Bedarf vergrößert oder verkleinert werden kann, und mit der außerdem mit derselben Traufe das Wasser in der Art eines geschlossenen Wasserstrahls vergoßen werden kann. Hierzu ist der Traufenbereich doppelwandig ausgebildet, wobei in jeder Wandung Durchbrüche vorhanden sind, die durch Drehen der Traufe übereinander angeordnet werden können, so daß ein Wasserdurchtritt möglich ist. Die Durchbrüche führen zu Kammerbereichen in der Traufe, die eine unterschiedliche Ausgießfläche aufweisen.

### DARSTELLUNG DER ERFINDUNG

Der Erfindung liegt die Aufgabe zugrunde, eine Brausekopfvorrichtung für eine Gießkanne zu schaffen, die einfach aufgebaut ist, preisgünstig herzustellen ist und mit der in einfacher Art und Weise fallweise gezielt und wassersparend gegossen werden kann.

Die erfindungsgemäße Brausekopfvorrichtung ist durch die Merkmale des Anspruchs 1 gegeben. Vorteilhafte Ausgestaltungen sind Gegenstand der Unteransprüche.

Diese Erfindung zeichnet sich dementsprechend dadurch aus, daß sie relativ zum Gießhals bewegbar ist, derart daß der freie Rand des Gießhalsendes an die Innenseite des Gießwasseraustrittsbereichs anlegbar ist. Mit diesem relativ geringen konstruktiven Aufwand läßt sich eine Gießkanne herstellen, die durch Hin- und Herschieben der Brausekopfvorrichtung in einfacher Art und Weise von Spar- auf Normalgießen und umgekehrt umgestellt werden kann. Der räumliche Verlauf der Umlaufkontur des freien Randes des Gießhalsendes ist hierbei entsprechend der räumlichen Anordnung des Gießwasseraustrittsbereichs im Anlegebereich ausgebildet. Zur Verbesserung der Handhabung ist eine Arretiervorrichtung vorhanden, die die Brausekopfvorrichtung in ihrer Lage relativ zum Gießhals arretiert und zwar in der Stellung Spar- bzw. Normalgießen.

In einer bevorzugten Ausgestaltung der erfindungsgemäßen Brausekopfvorrichtung sind Dichtmittel vorhanden, die ein weitgehend flüssigkeitsdichtes Anliegen des Gießhalsendes an der Innenseite des Gießwasseraustrittsbereiches gewährleisten.

Eine konstruktiv besonders einfache Ausgestaltung zeichnet sich dadurch aus, daß im überlappenden Bereich zwischen Gießhals und Brausekopfvorrichtung zwischen der Wandung des Gießhalses und der Wandung der Brausekopfvorrichtung ein Dichtmittel vorhanden ist, das bevorzugt als Gummiring ausgebildet ist.

Eine von der Funktionsfähigkeit her zuverlässige und einfache Ausgestaltungsvariante zeichnet sich dadurch aus, daß am Gießhals und an dem dem Gießwasseraustrittsbereich gegenüberliegenden Endbereich der Brausekopfvorrichtung jeweils ineinandergreifende Gewindeflächen vorhanden sind, so daß die Brausekopfvorrichtung gegenüber dem Gießhals durch Drehung derselben verschoben werden kann, wodurch der freie Rand des Gießhalsendes auf der Innenseite des Gießwasseraustrittsbereiches anlegbar bzw. lösbar ist.

Weitere Ausführungsformen und Vorteile der Erfindung sind den in den Ansprüchen weiterhin aufgeführten Merkmalen zu entnehmen.

### KURZE BESCHREIBUNG DER ZEICHNUNG

Die Erfindung wird im folgenden anhand der in der Zeichnung dargestellten Ausführungsbeispiele näher beschrieben und erläutert. Die der Beschreibung und der Zeichnung zu entnehmenden Merkmale können einzeln für sich oder zu mehreren in beliebiger Kombination angewandt werden. Es zeigen:
- Fig. 1: schematische Perspektivdarstellung einer Gießkanne mit Brausekopfvorrichtung,
- Fig. 2: eine Brausekopfvorrichtung im Bereich eines Gießhalses, wobei der Endbereich der Brausekopfvorrichtung und des Gießhalses jeweils ein Gewinde aufweist, in einer Explosionsperspektive und
- Fig. 3 a-c: schematische Ausschnittdarstellung mit unterschiedlichen Dichtvorrichtungen einer Brausekopfvorrichtung.

### WEGE ZUM AUSFÜHREN DER ERFINDUNG

Eine Gießkanne 10 weist einen Korpus 12 mit einer Einfüllöffnung 14 auf. Zur besseren Handhabung ist eine Griffeinrichtung 16 vorhanden. In der Nähe des Bodenbereiches des Korpus 12 schließt ein Gießhals 18 an. Am Ende des Gießhalses 18 ist ein Brausekopf 19 vorhanden, durch den hindurch beim Gießen das Wasser abgegeben wird.

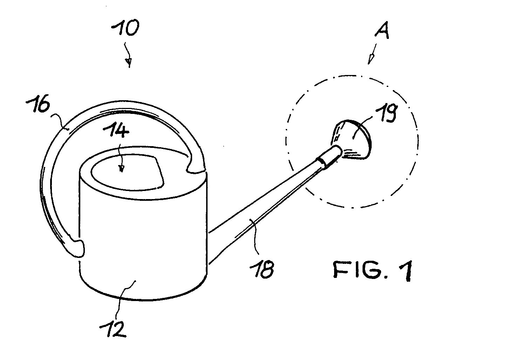

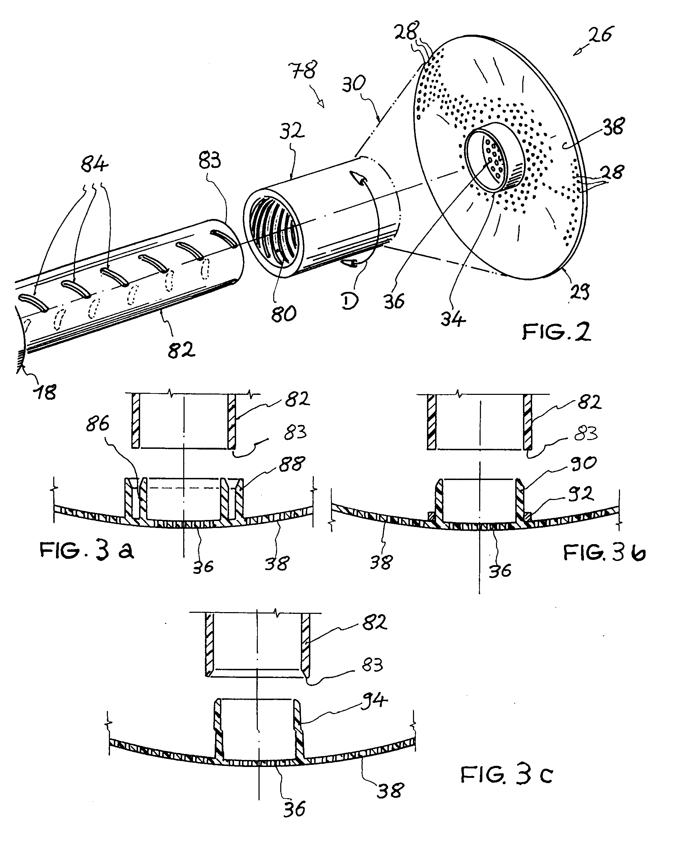

Der in Fig. 1 strichpunktiert umrandete Teilbereich A ist in Fig. 2 in einer explosionsartig auseinandergezogenen Perspektive dargestellt.

Das Verschieben der Brausekopfvorrichtung gegenüber dem Gießhals 18 kann dadurch erfolgen, daß die Brausekopfvorrichtung in bzw. aus einem am Gießhals und an der Brausekopfvorrichtung entsprechend vorhandenen Gewinde heraus- oder hineingedreht wird.

Bei dem in Fig. 2 dargestellten Brausekopf 78 ist eine konvex nach außen gekrümmte Gießfläche 26 mit Öffnungen 28 vorhanden. An die kreisförmige Umrandungslinie 29 der Gießfläche 26 schließt eine kegelstumpfförmige Außenwandung 30 an, an deren Randlinie eine weitere rohrförmige Außenwandung 32 anschließt.

Die Rohrwandung 32 des Brausekopfs 78 weist ein Innengewinde 80 auf. In das Innengewinde 80 ist der Endbereich 82 des Gießhalses 18 eindrehbar. Der Endbereich 82 weist gegenüber dem normalen Gießhalsbereich 18 einen geringeren Durchmesser auf, derart, daß durch das Eindrehen des Endbereichs 82 in die Rohrwandung 32 eine flüssigkeitsdichte Verbindung entsteht. Der Endbereich 82 weist um jeweils 180° gegeneinander versetzte Erhöhungen 84 auf, die im Verlauf einer gedachten Schraubenlinie außenseitig angebracht sind, wobei die Ganghöhe der gedachten Schraubenlinie, der Ganghöhe des Innengewindes entsprechen. In Fig. 9 ist der Gießhals 18 in seinem Endbereich und der Brausekopf 78 in auseinandergezogender Art dargestellt. Durch Aufschrauben des Brausekopfes 78 (Pfeil D) um wenige Umdrehungen kann in normalem Gießbetrieb, d. h. über die gesamte Gießfläche 38, 36 Gießwasser austreten. Durch weiteres Aufschrauben des Brausekopfes 78 bewegt sich der Endbereich 82 des Gießhalses 18 mit seiner freien Stirnseite 83 auf die Gießfläche zu, bis die Stirnseite 83 schließlich an der Innenwandung der Gießfläche 38 anliegt. Aus Dichtungsgründen ist eine als Kreisringkonsole ausgebildete Dichtungseinrichtung 34 an der Gießflächeninnenseite vorhanden, die einen kleineren Durchmesser aufweist als der Endbereich des Gießhalses 82. Bei anliegender Stirnseite 83 kann nur noch Gießwasser über die kreisringförmige Gießfläche 38 austreten, was ein Arbeiten im Sparbetrieb beispielsweise zum Gießen von Reihensaat ermöglicht.

Bei der in Fig. 3 a dargestellten Abdichtvorrichtung ist eine innere Kreisringkonsole 86 und eine äußere Kreisringkonsole 88 auf der Innenseite der Gießfläche vorhanden, wobei der lichte Abstand zwischen innerer Kreisringkonsole 86 und äußerer Kreisringkonsole 88 so gewählt ist, daß der Endbereich 82 des Gießhalses 18 einschiebbar ist. Um einem Verkanten beim Einschiebvorgang entgegenzutreten, weist sowohl die innere Konsole 86 als auch die äußere Konsole 88 eine schräg zum Zwischenraum hin abfallende Abphasung auf.

Eine alternative Abdichtvorrichtung mit nach außen abfallender Abphasung einer Kreisringkonsole 90 weist einen Außendurchmesser auf, der dem Innendurchmesser des Endbereichs 82 des Gießhalses 18 entspricht. Um diese Konsole 90 herum ist eine weitere Konsole 92 mit einem stumpfen stirnseitigen Endbereich angeordnet, wobei die Abmessung der Konsole 92 in Konsolenrichtung kleiner ist als die Abmessung der Konsole 90. Bei aufgesetztem Gießhals, d. h. bei Sparbetrieb, stoßen der stumpfe Endbereich der Konsole 92 und der stumpfe Endbereich des Gießhalsendbereiches 82 direkt aufeinander, wodurch ein Austritt von Wasser außerhalb der kreisringförmigen Gießfläche 36 verhindert wird.

Eine in Fig. 3 c dargestellte Abdichtvorrichtung weist eine an der Innenseite der Gießfläche vorhandene Kreisringkonsole 94 auf, deren Außendurchmesser im wesentlichen dem Innendurchmesser des Gießhalsendbereiches 82 entspricht, wobei der freie Endbereich der Konsole 94 eine nach außen abfallende Abphasung aufweist und die Wandung der Kreisrohrkonsole 94 leicht nach innen geneigt ist um einen funktionsfähigen dichten Verschluß zu gewährleisten.

## Patentansprüche

1. Brausekopfvorrichtung zum Aufsetzen auf einen Gießhals (18) einer Gießkanne mit
- einem Gießwasseraustrittsbereich (26) mit Wasseraustrittsöffnungen (28) und einer an den Gießwasseraustrittsbereich (26) anschließenden Außenwandung (30, 32), die bereichsweise mit dem Gießhals (18) zumindest weitgehend wasserdicht verbindbar ist,
**dadurch gekennzeichnet,** daß
die Brausekopfvorrichtung (78) soweit gegenüber dem Gießhals (18) bewegbar ist, daß der freie Rand (83) des Gießhalsendes (82) an die Innenseite des Gießwasseraustrittsbereichs (36, 38) anlegbar ist.

2. Brausekopfvorrichtung nach Anspruch 1,
**gekennzeichnet durch**
eine Arretiervorrichtung, die die Brausekopfvorrichtung in zumindest einer Lage relativ zum Gießhals lösbar arretiert.

3. Brausekopfvorrichtung nach Anspruch 1,
**dadurch gekennzeichnet,** daß
eine Dichtvorrichtung (86, 88; 90, 92; 94) vorhanden ist, die ein weitgehend flüssigkeitsdichtes Anliegen des Gießhalsendes (82) auf der Innenseite des Gießwasseraustrittsbereichsgewährleistet.

4. Brausekopfvorrichtung nach Anspruch 1,
**dadurch gekennzeichnet,** daß
das Gießhalsende (82) an der Innenseite des Gießwasseraustrittsbereichs (36, 38) vor dem Anliegen in eine(r) Führungseinheit zumindest bereichsweise eingreift bzw. geführt wird.

5. Brausekopfvorrichtung nach Anspruch 3 und 4,
**dadurch gekennzeichnet,** daß
die Führungseinheit bzw. Dichtvorrichtung als zumindest eine mit dem Gießwasseraustrittsbereich verbundene Kreisrohrkonsole ausgebildet ist.

6. Brausekopfvorrichtung nach einem oder mehreren der Ansprüche 1 bis 5,
**dadurch gekennzeichnet,** daß
am Gießhalsendbereich (82) und an dem dem Gießwasseraustrittsbereich gegenüberliegenden rohrförmigen Endbereich (32) der Brausekopfvorrichtung (78) jeweils ineinandergreifende Gewindeeinheiten (84, 80) vorhanden sind, so daß die Brausekopfvorrichtung (78) gegenüber dem Gießhals (18) durch Drehung der Brausekopfvorrichtung (78) verschoben werden kann (Fig. 9).

7. Brausekopfvorrichtung nach einem oder mehreren der Ansprüche 1 bis 5,
**dadurch gekennzeichnet,** daß
die Bewegung der Brausekopfvorrichtung gegenüber dem Gießhals durch Längsverschiebung der Brausekopfvorrichtung erfolgt.

8. Gießkanne,
**dadurch gekennzeichnet,** daß
am gießseitigen Ende des Gießhalses (18) der Gießkanne (10) eine Brausekopfvorrichtung (19, 78) nach einem oder mehreren der Ansprüche 1 bis 7 angeordnet ist.

## Claims

1. Spray-head device for attaching to a watering neck (18) of a watering can, having a watering-water outlet region (26) with water-outlet openings (28) and having an outer wall (30, 32) which adjoins the watering-water outlet region (26) and which, in certain areas, can be connected, in an at least largely water-tight manner, to the watering neck (18), characterized in that the spray-head device (78) can move with respect to the watering neck (18) to such an extent that the free border (83) of the watering-neck end (82) can butt against the inner side of the watering-water outlet region (36, 38).

2. Spray-head device according to Claim 1, characterized by an arresting device which releasably arrests the spray-head device in at least one position relative to the watering neck.

3. Spray-head device according to Claim 1, characterized in that there is provided a sealing device (86, 88; 90, 92; 94) which ensures a largely fluid-tight abutment of the watering-neck end (82) against the inner side of the watering-water outlet region.

4. Spray-head device according to Claim 1, characterized in that, on the inner side of the watering-water outlet region (36, 38), the watering-neck end (82), at least in certain areas, engages into and/or is guided in a guide unit before abutment.

5. Spray-head device according to Claims 3 and 4, characterized in that the guide unit or sealing device is designed as at least one tubular bracket which is connected to the watering-water outlet region.

6. Spray-head device according to one or more of Claims 1 to 5, characterized in that in each case inter-engaging threaded units (84, 80) are provided on the watering-neck end region (82) and on the tubular end region (32), located opposite the watering-water outlet region, of the spray-head device (78), with the result that the spray-head device (78) can be displaced with respect to the watering neck (18) by rotating the spray-head device (78) (Figure 2).

7. Spray-head device according to one or more of Claims 1 to 5, characterized in that the movement of the spray-head device with respect to the watering neck takes place by longitudinal displacement of the spray-head device.

8. Watering can, characterized in that a spray-head device (19, 78) according to one of more of Claims 1 to 7 is arranged at the watering-side end of the watering neck (18) of the watering can (10).

## Revendications

1. Ensemble de pomme d'arrosage à monter sur le bec (18) d'un arrosoir, avec une région (26) de sortie d'eau d'arrosage présentant des ouvertures (28) de sortie d'eau, et avec une paroi extérieure (30, 32) qui se raccorde à la région (26) de sortie d'eau d'arrosage et dont une région peut être assemblée au bec d'arrosoir (18) d'une manière au moins pour l'essentiel étanche à l'eau, **caractérisé** en ce que l'ensemble de pomme d'arrosage (78) peut être suffisamment déplacé sur le bec d'arrosoir (18) pour que le bord libre (83) de l'extrémité (82) du bec d'arrosoir puisse s'appliquer contre le côté intérieur de la région (36, 38) de sortie d'eau d'arrosage.

2. Ensemble de pomme d'arrosage selon la revendication 1, **caractérisé** par un dispositif de blocage, qui bloque avec possibilité de déblocage l'ensemble de pomme d'arrosage dans au moins une position par rapport au bec d'arrosoir.

3. Ensemble de pomme d'arrosage selon la revendication 1, **caractérisé** en ce qu'un dispositif d'étanchéité (86, 88 ; 90, 92 ; 94) est présent, qui assure une application pour l'essentiel étanche aux liquides de l'extrémité (82) du bec d'arrosoir sur le côté intérieur de la région de sortie d'eau d'arrosage.

4. Ensemble de pomme d'arrosage selon la revendication 1, **caractérisé** en ce qu'au moins une région de l'extrémité (82) du bec d'arrosoir s'engage ou est guidée sur le côté intérieur de la région (36, 38) de sortie d'eau d'arrosage avant de s'appliquer dans un dispositif de guidage.

5. Ensemble de pomme d'arrosage selon les revendications 3 et 4, **caractérisé** en ce que le dispositif de guidage ou d'étanchéité est réalisé sous la forme d'au moins une console tubulaire circulaire assemblée à la région de sortie d'eau d'arrosage.

6. Ensemble de pomme d'arrosage selon une ou plusieurs des revendications 1 à 5, **caractérisé** en ce que des éléments de filetage respectifs (84, 80) en engagement mutuel sont présents sur la région terminale (82) du bec d'arrosoir et sur la région terminale tubulaire (32) de l'ensemble de pomme d'arrosage (78) qui est opposée à la région de sortie d'eau d'arrosage, de sorte qu'on peut déplacer l'ensemble de pomme d'arrosage (78) par rapport au bec d'arrosoir (18) en faisant tourner l'ensemble de pomme d'arrosage (78).

7. Ensemble de pomme d'arrosage selon une ou plusieurs des revendications 1 à 5, **caractérisé** en ce que le déplacement de l'ensemble de pomme d'arrosage par rapport au bec d'arrosoir s'effectue par une translation longitudinale de l'ensemble de pomme d'arrosage.

8. Arrosoir, **caractérisé** en ce qu'un ensemble de pomme d'arrosage (19, 78) selon une ou plusieurs des revendications 1 à 7 est disposé à l'extrémité de sortie du bec (18) de l'arrosoir (10).
